# EUROPÄISCHE PATENTSCHRIFT

(11) **EP 1 554 504 B1**
(45) Veröffentlichungstag und Bekanntmachung des Hinweises auf die Patenterteilung: **05.04.2006**
(21) Anmeldenummer: 03757861.4
(22) Anmeldetag: 17.09.2003
(51) Int. Cl.: F16D 65/14

(54) **HYDRAULISCHE FAHRZEUGBREMSE**
HYDRAULIC VEHICLE BRAKE
FREIN HYDRAULIQUE DE VEHICULE

(30) Priorität: 17.09.2002 DE 10243226; 19.09.2002 DE 10243622; 13.12.2002 DE 10258649; 18.03.2003 DE 10311747; 27.03.2003 DE 10313707; 02.07.2003 DE 10329694; 04.07.2003 DE 10330389
(43) Veröffentlichungstag der Anmeldung: 20.07.2005
(73) Patentinhaber: Continental Teves AG & Co. oHG, 60488 Frankfurt (DE)
(72) Erfinder: HALASY-WIMMER, Georg, 71706 Markgröningen (DE); SCHIEL, Lothar, 65719 Hofheim (DE); WEILER, Rolf, 65817 Eppstein (DE); BALZ, Jürgen, 65510 Hünstetten-Oberlibbach (DE); SCHACK, Peter, 63500 Seligenstadt (DE); BAUER, Thomas, 60489 Frankfurt/Main (DE); DRUMM, Stefan, 55291 Saulheim (DE); HEISE, Andreas, 64546 Mörfelden (DE); SCHOLER, Joachim, 65931 Frankfurt/Main (DE); SCHMITT, Stefan, Johannes, 65343 Eltville (DE); POHLMANN, Andreas, 65760 Eschborn (DE); WINKLER, Thomas, 55122 Mainz (DE); KNOP, Volker, 56766 Ulmen (DE); SCHRIEFER, Jörn, 64404 Bickenbach (DE); HARTMANN, Ralf, 65830 Kriftel (DE); SCHILLE, Karsten, 30161 Hannover (DE); GÖRLACH, Johannes, 35428 Langgöns (DE); VOLZ, Peter, 64291 Darmstadt (DE)
(86) Internationale Anmeldenummer: PCT/EP2003/010351
(87) Internationale Veröffentlichungsnummer: WO 2004/027282

(56) Entgegenhaltungen:
- WO-A-90/08270
- DE-A- 19 711 382
- US-A- 4 215 767
- US-A- 4 699 253
- US-A- 5 949 168

## Beschreibung

Die Erfindung betrifft eine hydraulische Fahrzeugbremse mit Feststellbremsvorrichtung, insbesondere für Kraftfahrzeuge, mit einem Bremsgehäuse, in dem ein hydraulischer Betriebsdruckraum von einem Bremskolben begrenzt ist, wobei die Feststellbremsvorrichtung auf den Bremskolben wirkt und im zugespannten Zustand mittels einer Verriegelungsvorrichtung verriegelbar ist, und wobei ein mit dem Bremskolben zusammenwirkender Arbeitsspeicher mit mindestens einem integrierten Federelement vorgesehen ist.

Eine derartige hydraulische Fahrzeugbremse ist aus der DE 197 11 382 C2 und der US-A-4 215 767 bekannt.

Bei der vorbekannten Bremse erfolgt die Zuspannung der Bremse im Feststellmodus mittels eines zweistufigen Getriebes, das durch einen Elektromotor angetrieben wird. Eine Feststellbremsung erfolgt durch ein Bestromen des Elektromotors, wobei gleichzeitig ein Vorspannen des Federelementes des Arbeitsspeichers durchgeführt wird. Für den Lösevorgang der Feststellbremse ist eine Rückdrehung des Elektromotors erforderlich.

Es sind auch kombinierte Betriebs- und Feststellbremsen bekannt, bei denen für Betriebsbremsungen eine hydraulische Betätigungsvorrichtung und als Feststellbremse mechanisch betätigte Feststellvorrichtungen vorgesehen sind. Diese Anordnungen haben jedoch den Nachteil, dass neben der hydraulischen Zuleitung für jede Bremse noch ein zusätzliches Bremsseil vorgesehen werden muss. Hier ergibt sich ein erhöhter Material- und Fertigungsaufwand. Darüber hinaus kann das Bremsseil erst nach dem Einbau der Bremse am Fahrzeug montiert werden. Diese Montage liegt üblicherweise nicht im Bereich eines besonders sachkundigen Bremsenherstellers, sondern wird im allgemeinen vom Automobilhersteller durchgeführt. Der Automobilhersteller hat hier neben dem Nachteil eines erhöhten Montageaufwandes zusätzlich das Risiko einer Fehlmontage zu tragen.

Weiterhin ist aus der deutschen Offenlegungsschrift DE 42 05 590 C1 eine Bremsanlage bekannt, bei der eine Betriebsbremsung hydraulisch erfolgt und eine Feststellbremsung durch eine elektromotorische Stelleinheit unterstützt wird. Eine solche elektromotorische Stelleinheit, die unmittelbar auf die Stellung des Bremspedals einwirkt, entlastet zwar den Fahrer hinsichtlich des bei einer Feststellbremsung aufzubringenden Kraftaufwandes, ist jedoch mit einem zusätzlichen baulichen Aufwand verbunden. Daraus resultiert auch ein zusätzlicher kostenspezifischer Aufwand.

Es ist daher Aufgabe der Erfindung, eine hydraulische Fahrzeugbremse mit Feststellbremsvorrichtung der eingangs genannten Gattung dahingehend zu verbessern, dass die Feststellbremsfunktion unter Einhaltung der gesetzlichen Forderungen einfach und kostengünstig realisiert wird.

Diese Aufgabe wird erfindungsgemäß dadurch gelöst, dass die Feststellbremsvorrichtung durch einen im Betriebsdruckraum eingesteuerten Druck betätigbar ist, durch den der Arbeitsspeicher ladbar ist.

Bei einer vorteilhaft einfachen Ausführungsform der Erfindung ist der Arbeitsspeicher durch eine das Federelement aufnehmende Ausnehmung im Bremskolben gebildet, wobei das Federelement an einer mit dem Bremskolben in kraftübertragender Verbindung stehenden Platte abgestützt ist, die mit einem ersten Reibbelag zusammenwirkt.

Eine vorteilhafte Weiterbildung des Erfindungsgegenstandes sieht vor, dass die Verriegelungsvorrichtung durch eine Gewindemutter-Spindel-Anordnung gebildet ist, deren Gewindemutter sich am Bremskolben abstützt oder mit dem Bremskolben einstückig ausgebildet ist, während die Spindel mit einer ersten Reibfläche versehen ist, die im verriegelten Zustand mit einer im Bremsgehäuse verdrehgesichert angeordneten zweiten Reibfläche zusammenwirkt.

Außerdem ist die Spindel vorzugsweise mit einem axialen Zentrallager versehen, das mit einer hydraulischen oder elektromechanischen Einrichtung zum Aktivieren der Verriegelungsvorrichtung zusammenwirkt.

Dabei ist es besonders vorteilhaft, wenn die hydraulische Einrichtung durch einen mit dem Betriebsdruckraum in Verbindung stehenden, absperrbaren Druckraum sowie einen den Druckraum begrenzenden, mittels eines Federpakets vorgespannten Schaltkolben gebildet ist, der mit der Spindel derart zusammenwirkt, dass nach einer Senkung des im Druckraum herrschenden Druckes eine Übertragung der vom Federpaket aufgebrachten Kraft auf die Spindel stattfindet, so dass die Reibflächen der Verriegelungsvorrichtung außer Eingriff gebracht werden. Der Schaltkolben kann zweiteilig ausgeführt sein und aus einem ersten Schaltkolbenteil sowie einem zweiten Schaltkolbenteil bestehen, wobei zwischen den beiden Schaltkolbenteilen eine Federanordnung derart angeordnet ist, dass eine Relativbewegung des ersten Schaltkolbenteiles gegenüber dem zweiten Schaltkolbenteil möglich ist.

Die Übertragung der vom Federpaket aufgebrachten Kraft auf die Spindel erfolgt vorzugsweise mittels des ersten Schaltkolbenteiles, während das zweite Schaltkolbenteil ringförmig ausgebildet ist und das erste Schaltkolbenteil radial umgreift.

Bei einer vorteilhaften Weiterbildung des Erfindungsgegenstandes ist die elektromechanische Einrichtung durch ein mit der Spindel in kraftübertragender Verbindung stehendes Betätigungselement, sowie ein mittels einer elektromagnetischen Anordnung betätigbares zweites Betätigungselement gebildet, wobei beide Betätigungselemente mit zusammenwirkenden Schrägen bzw. Rampen versehen sind.

Eine weitere vorteilhafte Ausführung der Erfindung besteht darin, dass eine weitere Feder vorgesehen ist, die sich am Bremsgehäuse abstützt und die die Spindel in Richtung auf die zweite Reibfläche vorspannt.

Bei einer anderen vorteilhaften Weiterbildung des Erfindungsgegenstandes ist mindestens ein Teil der Verriegelungsvorrichtung im Arbeitsspeicher angeordnet.

Der Arbeitsspeicher ist bei dieser Ausführung durch einen mit dem Betriebsdruckraum in Verbindung stehenden, absperrbaren Speicherdruckraum sowie einen den Speicherdruckraum begrenzenden Speicherkolben gebildet, der mit einem begrenzt drehbar angeordneten Stellring in kraftübertragender Verbindung steht, an dem sich das Federelement abstützt und der mit einer Spindel in Eingriff bringbar ist, die mittels eines nicht selbsthemmenden Gewindes mit dem Bremskolben verbunden ist, wobei die Verriegelungsvorrichtung durch den Stellring und die Spindel gebildet ist.

Der Stellring weist dabei Führungsvorsprünge auf, die in unterschiedlich langen Führungsnuten geführt sind, die in der Wand eines den Arbeitsspeicher aufnehmenden Gehäuses in seiner Umfangsrichtung versetzt ausgebildet sind, wobei die Länge der kürzeren Führungsnut die gelöste Position der Verriegelungsvorrichtung und die Länge der längeren Führungsnut die verriegelte Position der Verriegelungsvorrichtung definiert.

Eine andere besonders vorteilhafte Ausführungsvariante des Erfindungsgegenstandes sieht vor, dass der Betriebsdruckraum einerseits vom Bremskolben und andererseits von einem Speicherkolben begrenzt ist, an dem sich ein Federpaket abstützt, wobei bei der Betätigung der Verriegelungsvorrichtung eine erste Kontakt- oder Reibfläche sowie eine zweite Kontakt- oder Reibfläche in Eingriff und beim Lösen außer Eingriff gebracht werden.

Die erwähnte Verriegelungsvorrichtung ist durch eine Gewindemutter-Spindel-Anordnung gebildet, deren Spindel mit dem Bremskolben verbunden ist, während die Gewindemutter mit einer ersten Reibfläche versehen ist, die im verriegelten Zustand mit einer im Speicherkolben ausgebildeten zweiten Reibfläche zusammenwirkt, und wobei eine elektromagnetische Einrichtung vorgesehen ist, die eine Zugkraft auf ein mit der Gewindemutter fest verbundenes Zugkraftübertragungsteil ausübt und somit eine starre Verriegelung zwischen dem Bremskolben und dem Speicherkolben bewirkt.

Zwischen der Gewindemutter und der Spindel ist ein nicht selbsthemmendes Gewinde vorgesehen.

Bei einer anderen vorteilhaften Weiterbildung der Erfindung wird der Arbeitsspeicher durch einen mit dem Betriebsdruckraum in Verbindung stehenden, absperrbaren Speicherdruckraum sowie einen den Speicherdruckraum begrenzenden Speicherkolben gebildet, wobei die Verbindung zwischen dem Betriebsdruckraum und dem Speicherdruckraum mittels eines mechanisch betätigbaren Trennventils absperrbar ist.

Die Verriegelungsvorrichtung ist bei dieser Ausführung durch eine Gewindemutter-Spindel-Anordnung gebildet, deren Spindel durch einen Elektromotor angetrieben wird, während die Gewindemutter die erste Kontaktfläche aufweist, die im verriegelten Zustand mit einer im Bremskolben ausgebildeten zweiten Kontaktfläche zusammenwirkt.

Zwischen der Gewindemutter und der Gewindespindel ist bei diesen Ausführungen ein selbsthemmendes Gewinde vorgesehen.

Bei einer anderen vorteilhaften Weiterbildung der Erfindung ist das Trennventil durch die Gewindemutter betätigbar.

Außerdem ist zwischen dem Betriebsdruckraum und dem Speicherdruckraum eine zweite Verbindung vorgesehen, in der ein zum Betriebsdruckraum hin öffnendes Rückschlagventil eingefügt ist.

Dabei ist es besonders vorteilhaft, wenn ein Mittel zum Lösen der Feststellbremse im Notfall vorgesehen ist, das mit dem Schaltkolben bzw. dem Speicherkolben zusammenwirkt. Der hydraulische Druckraum bzw. der Speicherdruckraum ist mittels eines elektrisch schaltbaren Ventils absperrbar.

Bei einer weiteren vorteilhaften Ausführungsform ist vorgesehen, dass eine Arretierungseinheit den Arbeitsspeicher während Betriebsbremsungen in seinem geladenen Zustand hält. Dabei wird die Arretierungseinheit durch mindestens einen Elektromagneten gebildet, dessen Spule die Funktion eines Sensors zur Erfassung der Position eines vom Anker des Elektromagneten betätigten Schiebers ausübt.

Außerdem übt die Spule die Funktion eines Sensors zur Überwachung des im Betriebsdruckraum eingesteuerten Druckes oder zur Erfassung des Zustands der Fahrzeugbremse oder der Feststellbremsvorrichtung aus.

Bei einer besonders vorteilhaften Ausführungsform wird die Arretierungseinheit durch mindestens zwei Elektromagnete gebildet, deren Anker mit dem Schieber verbunden sind, wobei die Spule des ersten Elektromagnets den Schieber betätigt, während die Spule des zweiten Elektromagnets die Funktion eines Sensors zur Erfassung der Schieberposition ausübt. Dabei übernehmen die Spulen die Funktion eines Sensors zur Erfassung der Schieberposition, wenn sie nicht die Funktion eines Aktuators zur Betätigung des Schiebers ausüben

Eine alternative Ausführungsform sieht vor, dass die Arretierungseinheit durch einen piezo-elektrisch betätigten Aktuator gebildet wird, der einen Schieber betätigt und die Funktion eines Sensors zur Erfassung der Schieberposition ausübt. Außerdem übt der piezo-elektrische Aktuator die Funktion eines Sensors zur Überwachung des im Betriebsdruckraum eingesteuerten Druckes und zur Erfassung des Zustands der Fahrzeugbremse oder der Feststellbremseinrichtung aus.

Weitere vorteilhafte Ausführungsformen sehen vor, dass der Druckaufbau sowohl im Betriebsdruckraum als auch im hydraulischen Druckraum mittels einer hydraulischen Pumpe, die als Fremddruckquelle eines elektrohydraulischen Bremssystems dient, oder mittels eines durch den Fahrzeugführer betätigbaren Druckerzeugers erfolgt.

Die Betätigung der erfindungsgemäßen Fahrzeugbremse kann zweckmäßigerweise auch auf andere, bereits im Bremssystem vorhandene elektrisch ansteuerbare Energiequellen zurück greifen (z.B. fremdansteuerbarer Bremskraftverstärker, Plungerantrieb, Hochdruckspeicher mit elektrischen Ventilen usw.).

Die Erfindung wird nachfolgend anhand von sieben Ausführungsbeispielen im Zusammenhang mit der beiliegenden Zeichnung näher erläutert. In der Zeichnung zeigen:
- Fig. 1: eine axiale Schnittdarstellung einer ersten Ausführung der erfindungsgemäßen hydraulischen Fahrzeugbremse in gelöstem Zustand,
- Fig. 2a,b: eine zweite Ausführung der erfindungsgemäßen hydraulischen Bremse in einer vereinfachten Darstellung in gelöstem und in verriegeltem Zustand,
- Fig. 3a,b: eine dritte Ausführung der erfindungsgemäßen hydraulischen Bremse im Axialschnitt in einer der Fig. 2a,b entsprechenden Darstellung,
- Fig. 4: eine vierte Ausführung der erfindungsgemäßen hydraulischen Bremse im Axialschnitt,
- Fig. 5: eine fünfte Ausführung der erfindungsgemäßen hydraulischen Bremse in einer Teildarstellung,
- Fig. 6: eine sechste Ausführung des Erfindungsgegenstandes im Axialschnitt,
- Fig. 7: eine siebte, lediglich teilweise dargestellte, Ausführung der erfindungsgemäßen hydraulischen Bremse im Axialschnitt und
- Fig. 8a-c: Ausführungsformen einer elektromagnetisch oder piezoelektrisch betätigten Arretierungseinheit, die in der siebten Ausführungsform einsetzbar sind, in Seitenansicht.

Die in der Zeichnung dargestellte erfindungsgemäße hydraulische Fahrzeugbremse weist ein Bremsgehäuse 1 auf, welches den äußeren Rand einer Bremsscheibe 2 und zwei auf beiden Seiten der Bremsscheibe 2 angeordnete Bremsbeläge 3, 4 umgreift. Das Bremsgehäuse 1 bildet auf seiner Innenseite einen Bremszylinder 5, der einen Bremskolben 6 axial verschiebbar aufnimmt. In den zwischen Bremszylinder 5 und Bremskolben 6 gebildeten Betriebsdruckraum 7 kann mittels eines hydraulischen Anschlusses 8 Bremsflüssigkeit zugeführt werden, so dass sich ein Bremsdruck aufbaut, der den Bremskolben 6 axial zur Bremsscheibe 2 hin verschiebt. Dadurch wird der dem Bremskolben 6 zugewandte Bremsbelag 3 gegen die Bremsscheibe 2 gedrückt, wobei als Reaktion das Bremsgehäuse 1 sich in der entgegengesetzten Richtung verschiebt und dadurch auch den anderen Bremsbelag 4 gegen die Bremsscheibe 2 drückt.

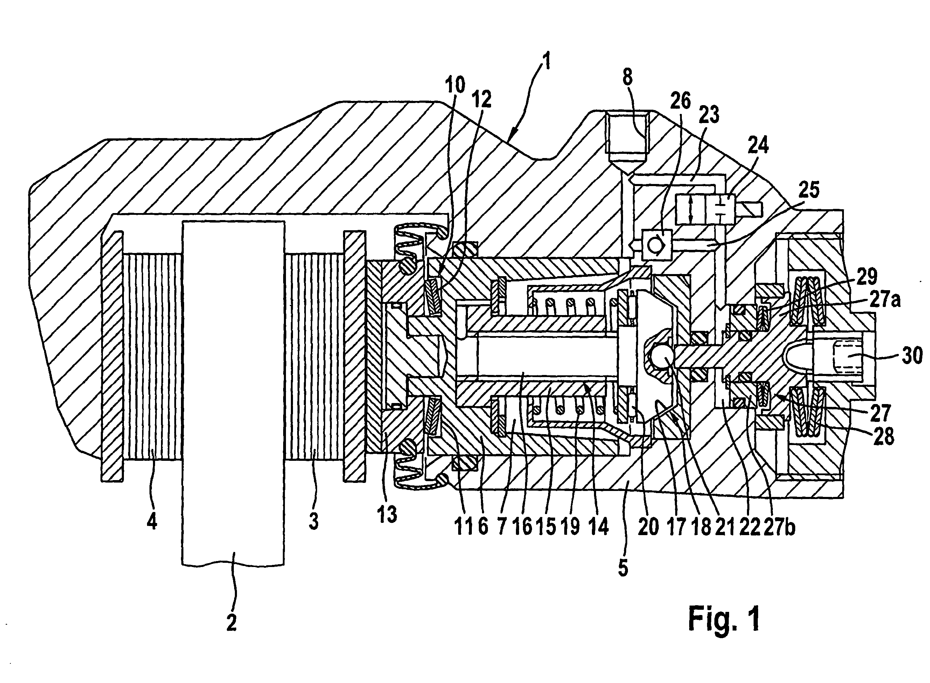

Wie insbesondere Fig. 1 zu entnehmen ist, ist in dem dem ersten Reibbelag 3 zugewandten Bereich des Bremskolbens 6 ein Arbeitsspeicher ausgebildet, der mit dem Bezugszeichen 10 versehen ist. Der Arbeitsspeicher 10 besteht im wesentlichen aus einer im Bremskolben 6 ausgebildeten ringförmigen Ausnehmung 11 sowie einem in der Ausnehmung 11 angeordneten Federelement 12, dass sich an einer Platte 13 abstützt, die gegenüber dem Bremskolben 6 relativ begrenzt bewegbar ist und mit diesem verbunden ist. Durch die erwähnten Maßnahmen wird erreicht, dass die auf die Bremsbeläge 3, 4 einwirkende Zuspannkraft von thermisch bedingten Längenänderungen Einflüssen im Bereich des Bremssattels nahezu unabhängig ist.

Eine Verriegelungsvorrichtung, die zur Realisierung einer Feststellbremsfunktion erforderlich ist, ist bei der in Fig. 1 dargestellten ersten Ausführung durch ein Spindelgetriebe bzw, eine Gewindemutter-Spindel-Anordnung gebildet, die mit dem Bezugszeichen 14 versehen ist. Die erwähnte Gewindemutter-Spindel-Anordnung 14 besteht aus einer Gewindemutter 15 sowie einer Spindel 16, die mittels eines nicht selbsthemmenden Gewindes miteinander in Verbindung stehen. Dabei ist die Gewindemutter 15 mit dem Bremskolben 6 starr verbunden, während die Spindel 16 an ihrem dem Bremskolben 6 abgewandten Ende eine vorzugsweise konische erste Reibfläche 17 aufweist, die mit einer im Bremsgehäuse 1 verdrehgesichert angeordneten zweiten Reibfläche 18 in-und außer Eingriff bringbar ist. Eine sich am Bremsgehäuse 1 abstützende Feder 19 spannt unter Zwischenschaltung eines Axiallagers 20 die Spindel 16 in Richtung auf die zweite Reibfläche 18 vor. Außerdem weist die Spindel 16 an ihrem dem Bremskolben 6 abgewandten Ende ein Zentrallager 21 auf, dessen Funktion nachfolgend erläutert wird.

Außerdem ist im Bremsgehäuse 1 ein zylindrischer Druckraum 22 vorgesehen, der mit dem hydraulischen Anschluss 8 bzw. dem Betriebsdruckraum 7 verbunden ist. In der Verbindung 23 des zylindrischen Druckraums 22 mit dem Anschluss 8 ist ein elektrisch schaltbares Ventil, vorzugsweise ein stromlos geschlossenes (SG-) Ventil 24 eingefügt, das ein Zusammenschalten der beiden Druckräume 7 und 22 über die Verbindung 23 ermöglicht. In einer weiteren Verbindung 25 zwischen dem zylindrischen Druckraum 22 und dem Betriebsdruckraum 7 ist ein zum Druckraum 22 hin schließendes Rückschlagventil 26 eingefügt. Ein den Druckraum 22 begrenzender Schaltkolben 27 bildet zusammen mit dem Druckraum 22 eine hydraulische Einrichtung zum Aktivieren der vorhin erwähnten Verriegelungsvorrichtung. Der in Richtung auf die Verriegelungsvorrichtung mittels eines Federpakets 28 vorgespannte Schaltkolben 27 ist vorzugsweise zweiteilig ausgeführt und besteht aus einem sich am Zentrallager 21 axial abstützenden ersten Schaltkolbenteil 27a und einem das erste Schaltkolbenteil 27a radial umgreifenden, ringförmigen zweiten Schaltkolbenteil 27b. Zwischen den beiden Schaltkolbenteilen 27a, 27b ist eine Federanordnung 29 derart angeordnet, dass beim Lösen der Feststellbremse eine begrenzte Relativbewegung des ersten (27a) gegenüber dem zweiten Schaltkolbenteil 27b stattfinden kann. Außerdem ist ein mechanisches Mittel 30 zum Lösen der Verriegelungsvorrichtung vorgesehen, das beispielsweise als ein mit dem ersten Schaltkolbenteil 27a zusammenwirkender Gewindebolzen ausgeführt werden kann.

Die erste Ausführung der erfindungsgemäßen hydraulischen Fahrzeugbremse ist in Fig. 1 in gelöstem Zustand der Feststellbremse dargestellt. Die Verriegelung der Feststellbremse erfolgt, nachdem im Betriebsdruckraum 7 ein hydraulischer Druck aufgebaut wurde, durch Umschalten des SG-Ventils 24 in seine offene Schaltstellung bzw. durch Beaufschlagen des Schaltkolbens 27 mit einem hydraulischen Druck. Bei der Bewegung des Schaltkolbens 27 in der Zeichnung nach rechts erfolgt eine Bewegung der Spindel 16 bis zum Eingriff der Reibflächen 17, 18. Zum Lösen der Feststellbremse wird im Betriebsdruckraum 7 ein hydraulischer Druck aufgebaut, der zur Entlastung der Spindel 16 führt, so dass die Reibflächen 17, 18 durch die Wirkung des Federpakets 28 auf den Schaltkolben 27 außer Eingriff gebracht werden.

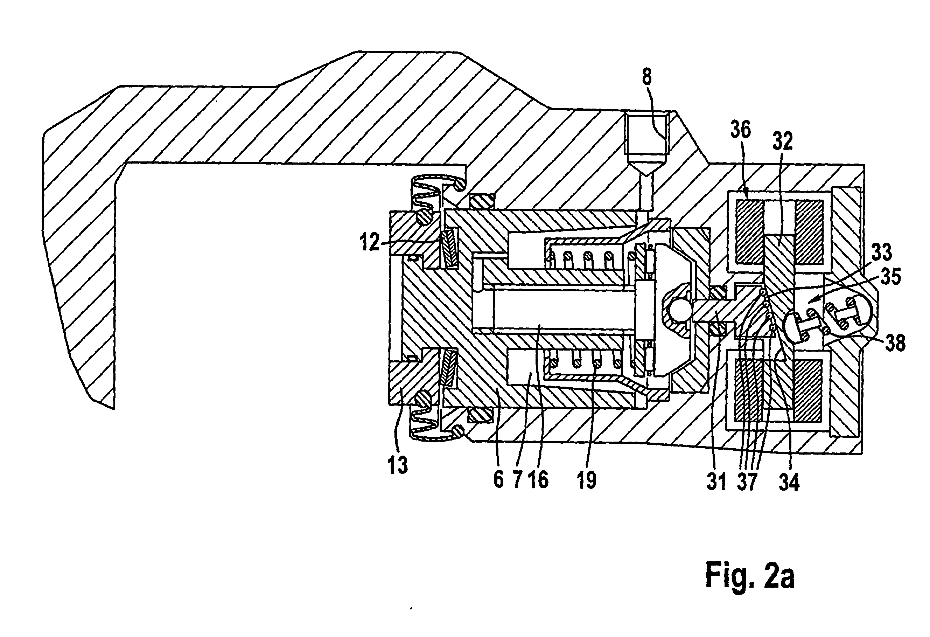

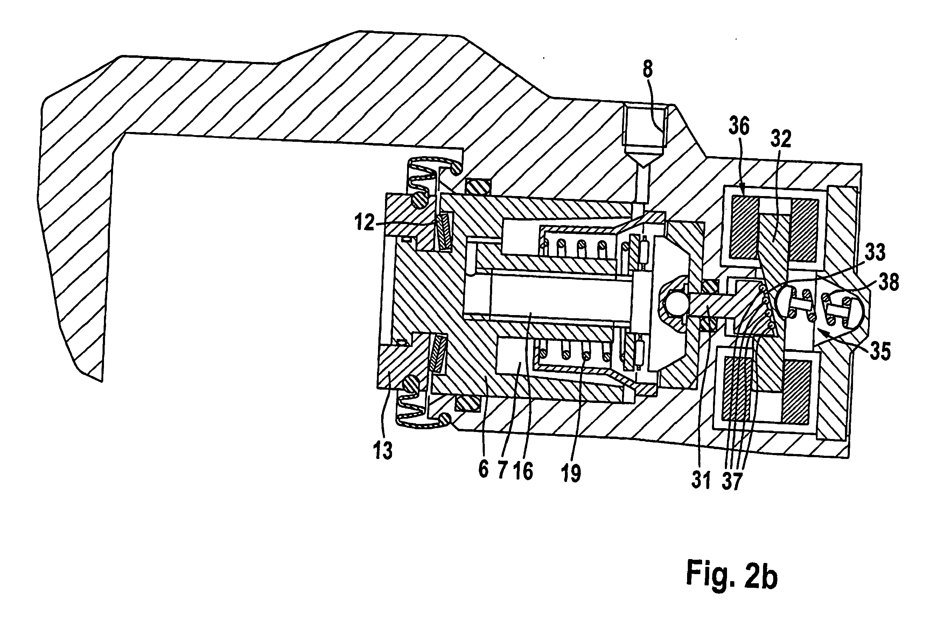

Bei der in Fig. 2a, b dargestellten zweiten Ausführung der erfindungsgemäßen Bremse ist die im Zusammenhang mit der in Fig. 1 gezeigten ersten Ausführung erwähnte Einrichtung zum Aktivieren der Verriegelungsvorrichtung als eine elektromechanisch bzw. elektromagnetisch betätigbare Einrichtung 35 ausgebildet, die im wesentlichen aus einem mit der Spindel 16 in kraftübertragender Verbindung stehenden Betätigungselement 31, sowie einem mittels einer elektromagnetischen Anordnung 36 betätigbaren zweiten Betätigungselement 32 besteht, das vorzugsweise durch den Anker der elektromagnetischen Anordnung 36 gebildet ist. Das erste Betätigungselement 31 weist eine erste Schräge bzw. Rampe 33 auf, die mit einer am zweiten Betätigungselement 32 ausgebildeten zweiten Schräge bzw. Rampe 34 zusammenwirkt. Um die zwischen den Schrägen 33, 34 auftretende Reibung zu minimieren sind schematisch angedeutete Rollkörper vorgesehen, die mit dem Bezugszeichen 37 versehen sind. Außerdem ist ein elastisches Mittel 38 zum Halten des zweiten Betätigungselementes 32 in seinen Endlagen vorgesehen, das vorzugsweise als eine mit zwei Abstütztendstücken versehene Druckfeder ausgebildet ist. Wie der Zeichnung zu entnehmen ist, zeigt Fig. 2a die zweite Ausführung in gelöstem Zustand der Verriegelungsvorrichtung, während in Fig. 2b die Verriegelungsvorrichtung in verriegeltem Zustand dargestellt ist.

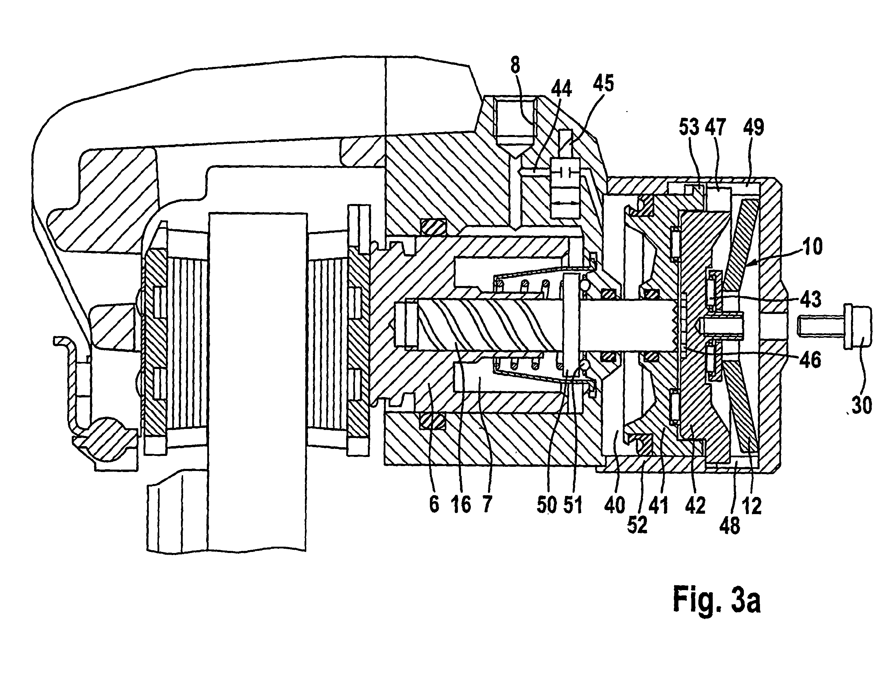

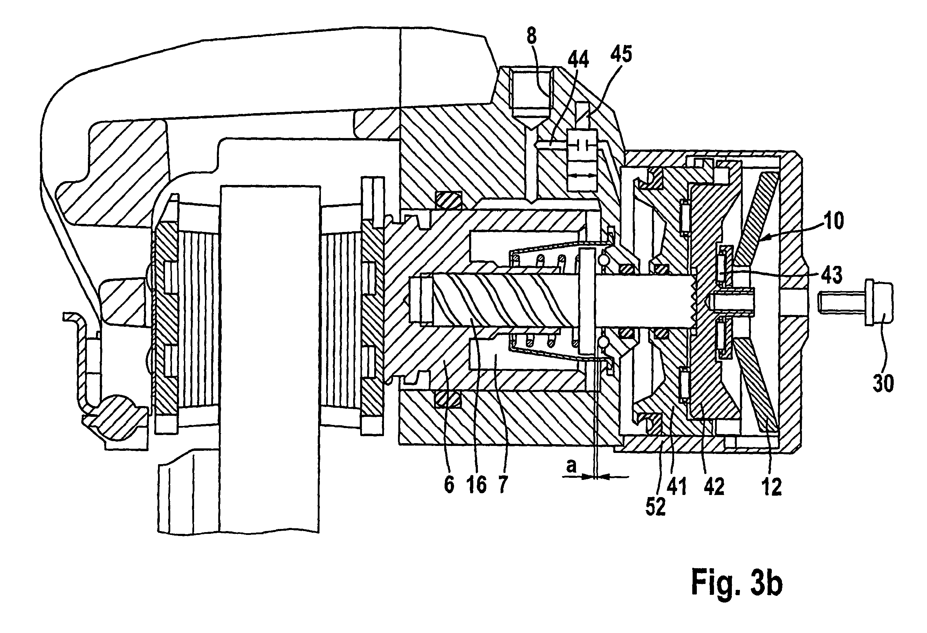

Bei der dritten Ausführung, die in Fig. 3a, b in gelöstem bzw. verriegeltem Zustand der Verriegelungsvorrichtung dargestellt ist, ist der Arbeitsspeicher 10 an dem dem Bremskolben 6 abgewandten Ende der Spindel 16 angeordnet und besteht im wesentlichen aus einem hydraulischen Speicherdruckraum 40, einem den Speicherdruckraum 40 begrenzenden Speicherkolben 41 sowie dem vorhin erwähnten Federelement 12, das im gezeigten Beispiel als eine Tellerfeder ausgeführt ist. Das Federelement 12 stützt sich über ein Axiallager 43 an einem Stellring 42 ab, der mit dem Steuerkolben 41 in kraftübertragender Verbindung steht und begrenzt drehbar angeordnet ist. Der Speicherdruckraum 40 ist über eine hydraulische Verbindung 44 mit dem im Zusammenhang mit der ersten Ausführung gemäß Fig. 1 erwähnten hydraulischen Anschluss 8 verbunden, wobei in der Verbindung 44 ein elektromagnetisch betätigbares, vorzugsweise stromlos geschlossenes (SG-) Ventil 45 eingefügt ist, mit dessen Hilfe die Verbindung 44 abgesperrt bzw. freigegeben werden kann. Dabei bildet der Bremskolben 6 eine Gewindemutter, die über ein nicht selbsthemmendes Gewinde mit der Spindel 16 zusammenwirkt. Die Spindel 16 stützt sich mittels eines radialen Bundes 50 an einem Axiallager 51 ab. Das dem Bremskolben 6 abgewandte Ende der Spindel 16, das sich durch den Steuerkolben 41 axial hindurch erstreckt, ist mit einer Feinverzahnung versehen, die mit einer entsprechend ausgebildeten mittleren Ausnehmung 46 im Stellring 42 in Eingriff bringbar ist. Die Feinverzahnung bildet zusammen mit dem Stellring 42 die Verriegelungsvorrichtung, wobei der Stellring 42 Führungsvorsprünge 47 aufweist, die mit Führungsnuten 48, 49 unterschiedlicher Länge zusammenwirken, die in der Wand eines zylinderförmigen Gehäuses 52 ausgebildet sind, das den Arbeitsspeicher 10 sowie die Verriegelungsvorrichtung aufnimmt. Die Länge der kürzeren Führungsnut 48 bestimmt dabei die dem Lösezustand der Verriegelungsvorrichtung entsprechende Endlage des Stellringes 42, während die Begrenzung der längeren Führungsnut 49 die dem verriegelten Zustand der Verriegelungsvorrichtung entsprechende Endlage des Stellringes 42 definiert. Die längere Führungsnut 49 nimmt außerdem einen am Steuerkolben 41 ausgebildeten Vorsprung 53 auf, der als Verdrehsicherung des Steuerkolbens 41 dient. Beim Verriegeln der Feststellbremseneinrichtung wird der Steuerkolben 41 mit hydraulischem Druck beaufschlagt und in der Zeichnung nach rechts verschoben, so dass der Stellring 42 aus seiner in Fig. 3a gezeigten arretierten Position angehoben wird und sich dreht. Hierbei erweist es sich als besonders vorteilhaft, wenn der Wirkdurchmesser des Steuerkolbens 41 größer als der Wirkdurchmesser des Bremskolbens 6 gewählt wird, um den Aktivierungsdruck der Feststellbremseinrichtung zu reduzieren. Bei einer anschließenden Senkung des auf den Steuerkolben 41 wirkenden Druckes wird der Stellring 42 durch die Kraft der Tellerfeder 12 nach links verstellt, so dass seine mit einer Innenverzahnung versehene Ausnehmung 46 mit dem feinverzahnten Ende der Spindel 16 in Eingriff gebracht wird. Wie in Fig. 3b dargestellt ist, wird die Spindel 16 durch den Eingriff mit dem Stellring 42 verdrehgesichert, so dass eine Übertragung der von der Tellerfeder 12 aufgebrachten Kraft auf den Bremskolben 6 erfolgt. Der vorhin erwähnte radiale Bund 50 der Spindel 16 befindet sich im verriegelten Zustand der Feststellbremseinrichtung im Abstand a vom Axiallager 51.

Zum Lösen der Feststellbremseneinrichtung wird das Ventil 45 zunächst mittels eines entsprechenden Ansteuersignals geöffnet, der Steuerkolben 41 wieder mit hydraulischem Druck beaufschlagt und in der Zeichnung nach rechts verschoben, so dass der Stellring 42 aus seiner in Fig. 3b gezeigten Position angehoben wird, sich weiter dreht und bei einem anschließenden Abbau des auf den Steuerkolben 41 wirkenden Druckes die in Fig. 3a dargestellte Endlage annimmt, die durch den Anschlag seines Führungsvorsprungs 47 an der Begrenzung der kürzeren Führungsnut 48 vorgegeben ist.

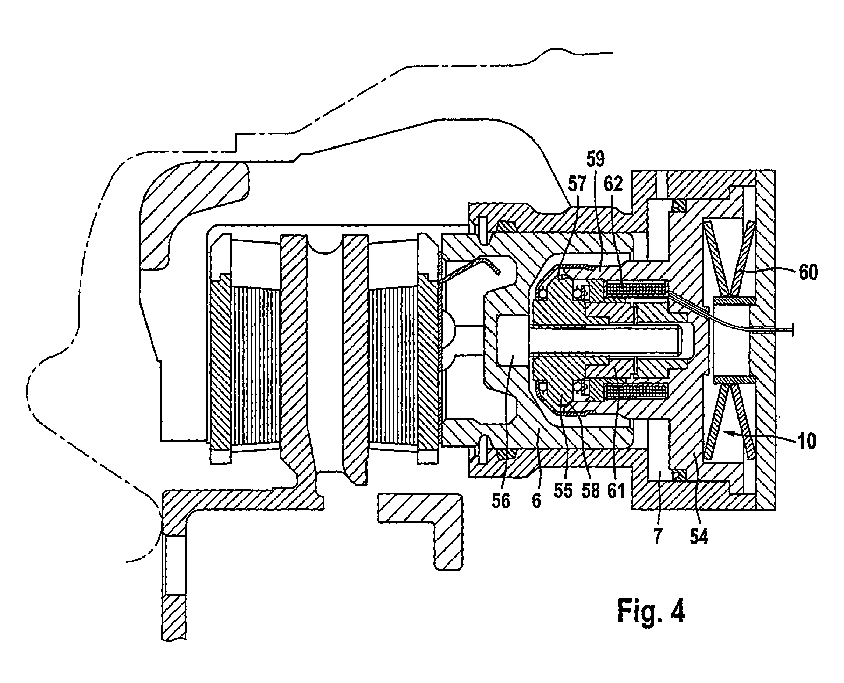

Die Anordnung des Arbeitsspeichers 10 bei der in Fig. 4 dargestellten vierten Ausführungsform des Erfindungsgegenstandes entspricht der der dritten Ausführung gemäß Fig. 3a, b. Bei dieser Ausführung dient der Betriebsdruckraum 7 gleichzeitig als Speicherdruckraum, der in der Zeichnung rechts von einem Speicherkolben 54 begrenzt wird. Das vorhin genannte Federelement ist durch ein sich am Speicherkolben 54 abstützendes Federpaket 60 gebildet. Die Verriegelungsvorrichtung ist wieder als eine Gewindemutter-Spindel-Anordnung ausgebildet, deren Spindel 56 mit dem Bremskolben 6 fest verbunden ist. Eine mittels eines nicht selbsthemmenden Gewindes mit der Spindel 56 gekoppelte Gewindemutter 55 weist eine erste Reibfläche 57 auf, die beim Verriegeln der Feststellbremseinrichtung mit einer zweiten Reibfläche 58 zusammenwirkt bzw. in Eingriff gebracht wird. Die zweite Reibfläche 58 ist dabei vorzugsweise am Ende einer sich in Richtung auf den Bremskolben 6 zu erstreckenden axialen Verlängerung 59 des Speicherkolbens 54 ausgebildet. Außerdem ist eine elektromagnetische Einrichtung 61, 62 vorgesehen, die von der Verlängerung 59 aufgenommen wird. Der Anker 61 der elektromagnetischen Einrichtung 61, 62 bildet ein Zugkraftübertragungsteil, das mit der Gewindemutter 55 fest verbunden ist, so dass beim Bestromen der Spule 62 der Anker 61 angezogen wird und den Spalt zwischen den beiden Reibflächen 57, 58 schließt, so dass eine starre Kopplung zwischen dem Bremskolben 6 und dem Speicherkolben 54 gewährleistet ist.

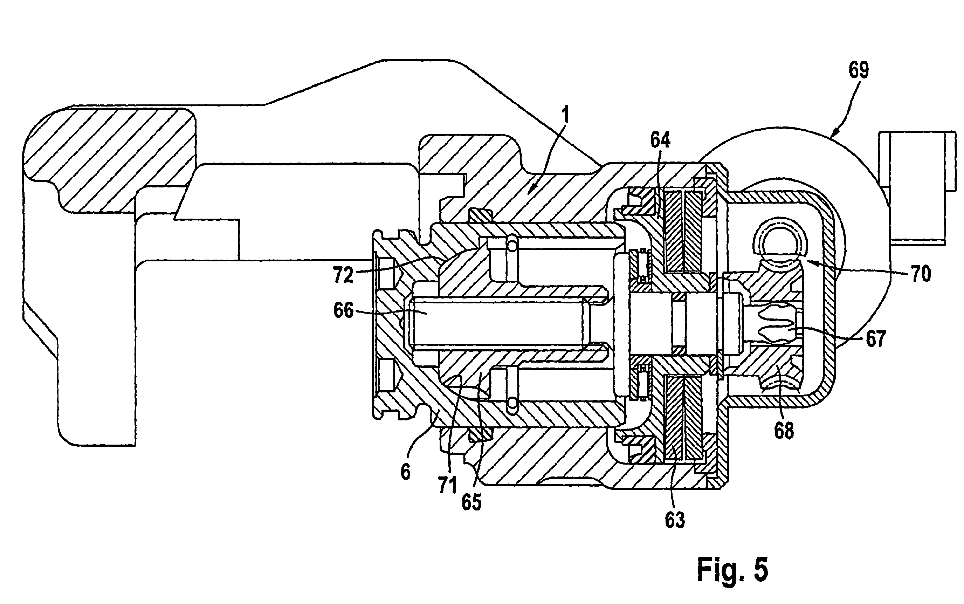

Einen ähnlichen Aufbau der Verriegelungsvorrichtung weist auch die in Fig. 5 dargestellte fünfte Ausführungsform der Erfindung auf. Der Speicherkolben 64 dient gleichzeitig als eine radiale Führung der Spindel 66 der Gewindemutter-Spindel-Anordnung, wobei am Ende der Spindel 66 ein kardanähnliches Gelenk 67 ausgebildet ist. Das Gelenk 67 wirkt mit einem Zahnrad 68 eines Winkelgetriebes 70 zusammen, das der Übertragung der Drehbewegung der Ausgangswelle eines Elektromotors 69 auf die Spindel 66 dient. Eine mittels eines selbsthemmenden Gewindes mit der Spindel 66 gekoppelte Gewindemutter 65 weist eine erste Kontaktfläche 71 auf, die beim Verriegeln der Feststellbremseinrichtung mit einer zweiten Kontaktfläche 72 zusammenwirkt bzw. in Eingriff gebracht wird. Die zweite Kontaktfläche 72 ist dabei vorzugsweise im Bremskolben 6 ausgebildet.

Beim Zuspannen der Feststellbremse wird, wie bei der Ausführung gemäß Fig. 4, im Betriebsdruckraum 7 ein hydraulischer Druck aufgebaut, der einerseits ein Verschieben des Bremskolbens 6 in der Zeichnung nach links und andererseits eine Bewegung des Speicherkolbens 64 nach rechts bewirkt, so dass das mit dem Bezugszeichen 63 bezeichnete Federpaket weiter vorgespannt wird. Durch anschließendes Ansteuern des Elektromotors 69 bzw. eine Drehbewegung der Spindel 66 erfolgt eine translatorische Bewegung der Gewindemutter 65 in Richtung auf den Bremskolben 6 zu, bis die Kontaktflächen 71, 72 in Eingriff gebracht werden. Dadurch wird die Feststellbremse in einen verriegelten Zustand gebracht. Beim Lösen der Feststellbremse wird wieder im Betriebsdruckraum 7 ein hydraulischer Druck aufgebaut, so dass die Spindel 66 entlastet wird und durch die Ansteuerung des Elektromotors 69 in der der Betätigungsrichtung entgegengesetzten Richtung zurückgedreht wird, so dass die Kontaktflächen 71, 72 außer Eingriff gebracht werden und der Bremskolben 6 in eine unbetätigte Stellung überführt werden kann.

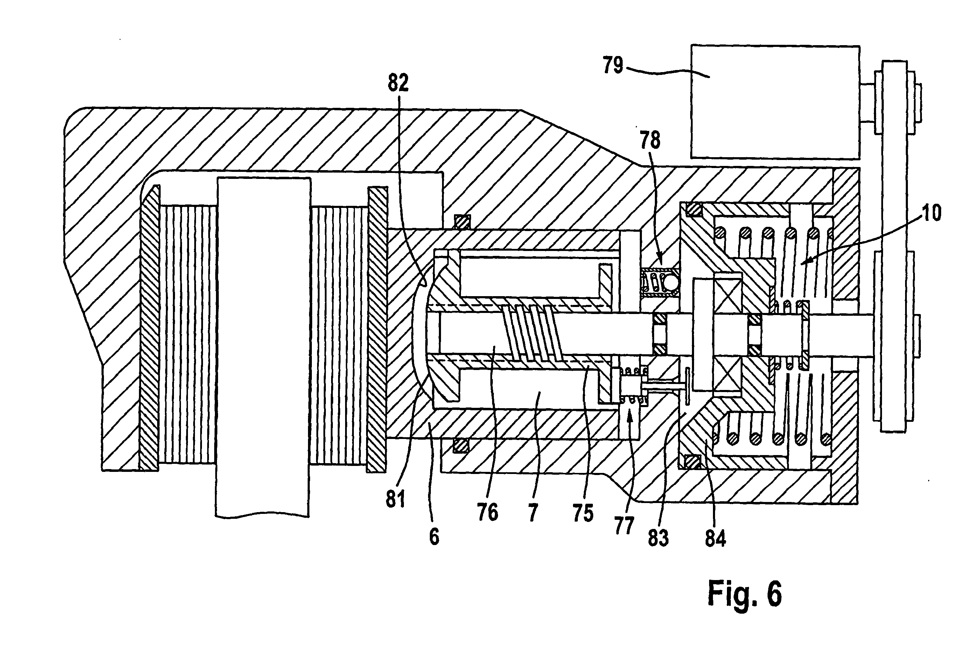

Bei der in Fig. 6 dargestellten sechsten Ausführung des Erfindungsgegenstandes ist der Betriebsdruckraum 7 vom Speicherdruckraum 83 getrennt, wobei in der Verbindung der beiden Räume 7 und 83 ein vorzugsweise mechanisch betätigbares Trennventil 77 eingefügt ist. Die Verriegelungsvorrichtung ist wieder, wie bei der vorhergehenden Ausführung, als eine Spindel-Mutter-Anordnung ausgebildet, wobei die Spindel mit dem Bezugszeichen 76, die Gewindemutter mit dem Bezugszeichen 75 und die entsprechenden Kontaktflächen mit den Bezugszeichen 81, 82 bezeichnet sind. Außerdem ist in einer zweiten Verbindung zwischen dem Betriebsdruckraum 7 und dem Speicherdruckraum 83 ein zum Betriebsdruckraum 7 hin öffnendes Rückschlagventil 78 vorgesehen, wobei ein die Spindel 76 antreibender Elektromotor 79 derart angeordnet ist, dass seine Längsachse parallel zur Längsachse der Spindel-Mutter-Anordnung verläuft. Die Gewindemutter 75 ist selbstverständlich im Bremskolben 7 verdrehgesichert geführt. Da die Funktionsweise der sechsten Ausführung im wesentlichen der der fünften Ausführung entspricht, braucht sie nicht ausführlich erläutert zu werden.

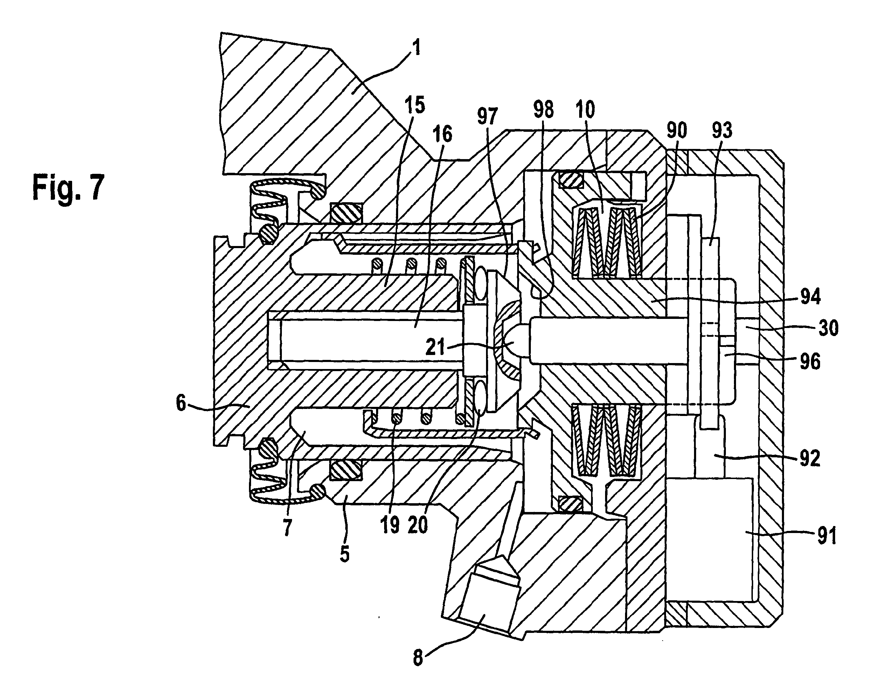

Bei einer siebten Ausführung, die in Fig. 7 in gelöstem Zustand der Verriegelungsvorrichtung dargestellt ist, ist der Arbeitsspeicher 10 an der dem Bremskolben 6 abgewandten Seite des Bremsgehäuses 1 angeordnet und besteht im wesentlichen aus einem den Betriebsdruckraum 7 begrenzenden Speicherkolben 94 und einem Federelement 90. Der Betriebsdruckraum 7 dient bei dieser Ausführung ähnlich der in Fig. 4 dargestellten Ausführungsform gleichzeitig als Speicherdruckraum. Die Verriegelungsvorrichtung ist wieder als eine Gewindemutter-Spindel-Anordnung ausgebildet, deren Gewindemutter 15 einstückig mit dem Bremskolben 6 ausgebildet ist. Eine mittels eines nicht selbsthemmenden Gewindes mit der Gewindemutter 15 gekoppelte Spindel 16 weist eine erste Reibfläche 97 auf, die beim Verriegeln der Feststellbremseinrichtung mit einer zweiten Reibfläche 98 am Speicherkolben 94 zusammenwirkt.

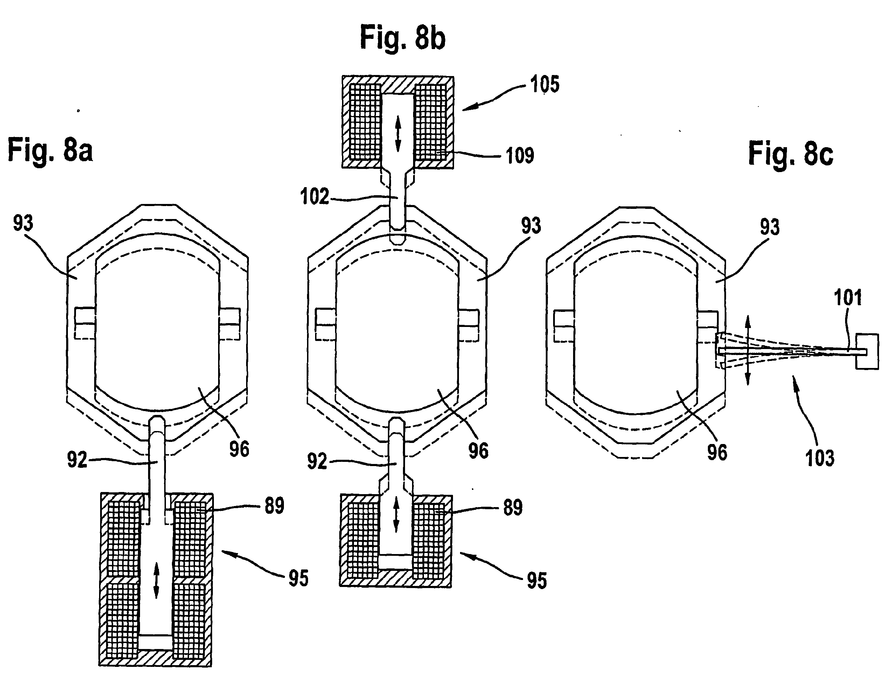

Außerdem ist eine Arretierungseinheit 91 vorgesehen, deren Seitenansicht in Fig. 8a dargestellt ist. Die Arretierungseinheit 91 ist außerhalb des Arbeitsspeichers 10 angeordnet und wird durch einen Elektromagneten 95 gebildet, dessen Anker 92 mit einem Schieber 93 fest verbunden ist. Während Betriebsbremsungen wird der Speicherkolben 94 durch den Schieber 93 blockiert, indem eine translatorische Bewegung eines kraftübertragenden Teils 96, das mit dem Speicherkolben 94 fest verbunden ist, in Richtung des Bremskolbens 6 verhindert wird. Zu diesem Zweck ist das kraftübertragende Teil 96 derart ausgebildet, dass es zwei Vorsprünge aufweist, die von in dem Schieber 93 ausgebildeten Aussparungen aufgenommen werden. Wie insbesondere Fig. 8a zu entnehmen ist, wird das kraftübertragende Teil 96 an einer Bewegung in Richtung auf den Bremskolben 6 zu gehindert, indem sich die Vorsprünge am Schieber 93 abstützen. Wird der Schieber 93 durch den Elektromagneten 95 derart bewegt, dass die Vorsprünge des kraftübertragenden Teils 96 mit den Aussparungen am Schieber 93 fluchten, so kann sich das kraftübertragende Teil 96 bzw. der Speicherkolben 94 in Richtung auf den Bremskolben 6 zu bewegen. Diese Position des Schiebers 93 und des Ankers 92 ist in Fig. 8a mit den gestrichelten Linien dargestellt. Eine translatorische Bewegung des kraftübertragenden Teils 96 in die Gegenrichtung über die in Fig. 8a dargestellte Position hinweg, wird ebenfalls unterdrückt, da der Speicherkolben 94 in dieser Richtung gegenüber dem Bremsgehäuse 1 zum Anschlag kommt. Dadurch wird während der Betriebsbremsungen eine zusätzliche Volumenaufnahme des Betriebsdruckraums 7 verhindert, die durch einen in der Zeichnung sich nach rechts bewegenden Speicherkolben 94 verursacht würde.

Beim Zuspannen der Feststellbremseinrichtung wird im Betriebsdruckraum 7 ein hydraulischer Druck aufgebaut, der sowohl ein Verschieben des Bremskolbens 6 in der Zeichnung nach links als auch eine Entlastung des Speicherkolbens 94 entgegen der Kraftwirkung des Federelements 90 bewirkt. Nach dieser Entlastung ist der Schieber 93 betätigbar und kann das kraftübertragende Teil 96 frei geben, indem die Aussparungen des Schiebers 93 mit den Vorsprüngen des kraftübertragenden Teils 96 zur Deckung gebracht werden. Nach der Betätigung des Schiebers 93 erfolgt durch das hydraulisch vorgespannte Federelement 90 eine translatorische Bewegung des Speicherkolbens 94 in Richtung auf den Bremskolben 6 zu, bis die Reibflächen 97, 98 in Eingriff stehen, womit die Feststellbremseinrichtung in einen verriegelten Zustand versetzt wird. Dabei hebt die Spindel 16 vom Zentrallager 21 ab und das Federpaket 90 wirkt mittels des geschlossenen Kraftflusses vom Speicherkolben 94 über die Gewindemutter-Spindel-Anordnung auf den Bremskolben 6 und bringt einen Anteil der für die Durchführung des Feststellbremsvorgangs nötige Zuspannkraft auf. Zum Lösen der Feststellbremseinrichtung wird wieder ein hydraulischer Druck im Betriebsdruckraum 7 aufgebaut und der Speicherkolben 94 in Fig. 7 nach rechts verschoben, wobei das Federelement 90 hydraulisch vorgespannt wird. Hierbei ist es vorteilhaft, wenn der Wirkdurchmesser des Speicherkolbens 94 größer als der Wirkdurchmesser des Bremskolbens 6 gewählt wird, wodurch der Aktivierungsdruck der Feststellbremseinrichtung reduziert wird. Im gelösten Zustand der Feststellbremseinrichtung wird der Speicherkolben 94 wieder mittels des kraftübertragenden Teils 96 durch den Schieber 93 blockiert. Außerdem kann ein mechanisches Mittel 30 zum Lösen der Verriegelungsvorrichtung vorgesehen sein.

Die Spule 89 des Elektromagneten 95 erfüllt die Funktion eines Sensors zur Erfassung der Position des Schiebers 93, bei der erkennbar ist, ob das kraftübertragende Teil 96 frei gegeben oder blockiert ist bzw. ob die Feststellbremseinrichtung gelöst oder verriegelt ist. Dadurch kann eine ungewollte Verriegelung der Feststellbremseinrichtung während der Betriebsbremsungen verhindert werden. Außerdem kann durch die Ermittlung der Schieberposition auch der Zustand der Fahrzeugbremse oder der Feststellbremseinrichtung ermittelt werden. Wenn beispielsweise die Bremsbeläge verschlissen sind oder die die Spindel 16 vorspannende Feder 19, deren Funktion bereits anhand von Fig. 1 beschrieben wurde, defekt ist, so bewegt sich der Bremskolben 6 während einer Betätigung in der Zeichnung weiter nach links als im Normalfall. Dies hat zur Folge, dass sich der vom Schieber 93 zur Verriegelung der Feststellbremseinrichtung freigegebene Speicherkolben 94 ebenfalls weiter nach links bewegen wird. Dadurch befindet sich das dem Bremskolben 6 abgewandte Ende des kraftübertragenden Teils 96 außerhalb des Bewegungsbereichs des Schiebers 93. Wird der Schieber 93 in dieser Situation betätigt, so bewegt er sich weiter vom Elektromagneten 95 weg als bei den bisher erläuterten Arretierungspositionen. Dieser Zustand wird durch eine Bestimmung der SchieberPosition erkannt.

Um die Schieberposition zuverlässig zu ermitteln, wird die durch die Ankerbewegungen verursachte Induktivitätsänderung der Spule 89 des Elektromagneten 95 bestimmt. Dies geschieht, indem an die Spule 89 rechteckförmige Spannungsimpulse angelegt werden. Gleichzeitig wird der Verlauf des durch die Spule 89 fließenden Stroms ermittelt. Dieser Stromverlauf lässt auf die Position des Ankers 92 und damit auf die Position des Schiebers 93 schließen. Verändert sich die Position des Ankers 92, so ändert sich auch der Verlauf des durch die Spule 89 fließenden Stroms.

In Fig. 8b ist eine Arretierungseinheit 91 dargestellt, die zwei Elektromagnete 95, 105 aufweist. Bei dieser Ausführung sind beide Anker 92, 102 mit dem Schieber 93 starr verbunden. Dies hat den Vorteil, dass eine gegenseitige Kontrolle mittels eines Vergleichs der beiden Ankerpositionen möglich ist, indem die Induktivitätsänderungen der beiden Spulen 89, 109 separat bestimmt werden können. Zudem kann die Positionsbestimmung fortlaufend erfolgen, da die erste Spule 89 den Anker 92 und den mit ihm verbundenen Schieber 93 sowie den zweiten Anker 102 betätigt, während mit Hilfe der Änderung des Stromverlaufs in der zweiten Spule 109 die Position der beiden Anker 92, 102 und des Schiebers 93 bestimmt wird. Diese Anordnung kann zudem den im Betriebsdruckraum 7 eingesteuerten Druck überwachen. Wird beispielsweise während des Druckaufbaus, der für die Feststellbremsung notwendig ist, der erste Elektromagnet 95 derart angesteuert, dass er, sobald der Speicherkolben 94 durch den Druckaufbau hinreichend entlastet ist, die beiden Anker 92, 102 und den Schieber 93 betätigen würde, so kann dieser Druckwert durch das bereits beschriebene Verfahren mit dem zweiten Elektromagneten 105 erkannt werden. Ein entsprechender Vorgang lässt sich dabei selbstverständlich auch während des Druckaufbaus zur Beendigung einer Feststellbremsung durchführen.

Eine weitere Ausführungsform der Arretierungseinheit 91 ist in Fig. 8c dargestellt. Die Arretierungseinheit 91 ist hier als piezo-elektrischer Aktuator 103 ausgebildet, der im wesentlichen durch einen piezo-elektrisch betätigten Biegebalken 101 gebildet ist. Der Biegebalken 101 wird am Schieber 93 von einer Ausnehmung aufgenommen und befindet sich im spannungslosen Zustand in einer mittleren Betätigungsposition. Durch das Anlegen einer Spannung an den Biegebalken 101 wird der Biegebalken 101 verformt und betätigt den Schieber 93, wodurch das kraftübertragende Teil 96 blockiert oder frei gegeben wird. Zur Sensierung der Schieberposition wird bei dieser Ausführung die Stromaufnahme und/oder die Kapazität des piezo-elektrisch betätigten Biegebalkens 101 gemessen. Eine nicht dargestellte Ausführungsform mit zwei piezo-elektrischen Aktuatoren, ähnlich der Ausführung in Fig. 8b mit zwei Elektromagneten (95, 105), ist ebenfalls Bestandteil der Erfindung.

Anstelle des sich transversal bewegenden Schiebers 93, kann der Schieber 93 auch derart ausgeführt sein, dass er sich während der Betätigung durch die Elektromagnete 95, 105 um seine eigene Achse dreht und somit das kraftübertragende Teil 96 blockiert oder frei gibt.

Wie bereits erwähnt wurde, werden zum Druckaufbau sowohl im Betriebsdruckraum 7 als auch im Speicherdruckraum 22, 40 verschiedene, vorzugsweise fremdansteuerbare Druckerzeugungsaggregate verwendet. So kann z. B. eine hydraulische Pumpe eingesetzt werden, die als Fremddruckquelle eines elektrohydraulischen Bremssystems dient. Denkbar ist auch eine Betätigungseinheit mit einem fremdansteuerbaren Bremskraftverstärker sowie einem dem Bremskraftverstärker nachgeschalteten Hauptbremszylinder. Alternativ kann jedoch auch ein durch den Fahrzeugführer betätigbarer Druckerzeuger Verwendung finden.

## Patentansprüche

1. Hydraulische Fahrzeugbremse mit Feststellbremsvorrichtung, insbesondere für Kraftfahrzeuge, mit einem Bremsgehäuse, in dem ein hydraulischer Betriebsdruckraum von einem Bremskolben begrenzt ist, wobei die Feststellbremsvorrichtung auf den Bremskolben wirkt und im zugespannten Zustand mittels einer Verriegelungsvorrichtung verriegelbar ist, und wobei ein mit dem Bremskolben zusammenwirkender Arbeitsspeicher mit mindestens einem integrierten Federelement vorgesehen ist, **dadurch gekennzeichnet, dass** die Feststellbremsvorrichtung durch einen im Betriebsdruckraum (7) eingesteuerten Druck betätigbar ist, durch den der Arbeitsspeicher (10) ladbar ist.

2. Hydraulische Fahrzeugbremse nach Anspruch 1, **dadurch gekennzeichnet, dass** der Arbeitsspeicher (10) durch eine das Federelement (12) aufnehmende Ausnehmung (11) im Bremskolben (6) gebildet ist und dass das Federelement (12) an einer mit dem Bremskolben (6) in kraftübertragender Verbindung stehenden Platte (13) abgestützt ist, die mit einem ersten Reibbelag (3) zusammenwirkt.

3. Hydraulische Fahrzeugbremse nach Anspruch 2, **dadurch gekennzeichnet, dass** die Verriegelungsvorrichtung durch eine Gewindemutter-Spindel-Anordnung (14) gebildet ist, deren Gewindemutter (15) sich am Bremskolben (6) abstützt oder mit dem Bremskolben (6) einstückig ausgebildet ist, während die Spindel (16) mit einer ersten Reibfläche (17) versehen ist, die im verriegelten Zustand mit einer im Bremsgehäuse (1) verdrehgesichert angeordneten zweiten Reibfläche (18) zusammenwirkt.

4. Hydraulische Fahrzeugbremse nach Anspruch 3, **dadurch gekennzeichnet, dass** die Spindel (16) mit einem axialen Zentrallager (21) versehen ist, das mit einer hydraulischen oder elektromechanischen Einrichtung (22,27 bzw. 35) zum Aktivieren der Verriegelungsvorrichtung (14) zusammenwirkt.

5. Hydraulische Fahrzeugbremse nach Anspruch 4, **dadurch gekennzeichnet, dass** die hydraulische Einrichtung (22,27) durch einen mit dem Betriebsdruckraum (7) in Verbindung stehenden, absperrbaren Druckraum (22) sowie einen den Druckraum (22) begrenzenden, mittels eines Federpakets (28) vorgespannten Schaltkolben (27) gebildet ist, der mit der Spindel (16) derart zusammenwirkt, dass nach einer Senkung des im Druckraum (22) herrschenden Druckes eine Übertragung der vom Federpaket (28) aufgebrachten Kraft auf die Spindel (16) stattfindet, so dass die Reibflächen (17,18) der Verriegelungsvorrichtung außer Eingriff gebracht werden.

6. Hydraulische Fahrzeugbremse nach Anspruch 5 **dadurch gekennzeichnet, dass** der Schaltkolben (27) zweiteilig ausgeführt ist und aus einem ersten Schaltkolbenteil (27a) sowie einem zweiten Schaltkolbenteil (27b) besteht, wobei zwischen den beiden Schaltkolbenteilen (27a,27b) eine Federanordnung (29) derart angeordnet ist, dass eine Relativbewegung des ersten Schaltkolbenteiles (27a) gegenüber dem zweiten Schaltkolbenteil (27b) möglich ist.

7. Hydraulische Fahrzeugbremse nach Anspruch 6 **dadurch gekennzeichnet, dass** die Übertragung der vom Federpaket (28) aufgebrachten Kraft auf die Spindel (16) mittels des ersten Schaltkolbenteiles (27a) erfolgt, während das zweite Schaltkolbenteil (27b) ringförmig ausgebildet ist und das erste Schaltkolbenteil (27a) radial umgreift.

8. Hydraulische Fahrzeugbremse nach Anspruch 4, **dadurch gekennzeichnet, dass** die elektromechanische Einrichtung (35) durch ein mit der Spindel (16) in kraftübertragender Verbindung stehendes Betätigungselement (31), sowie ein mittels einer elektromagnetischen Anordnung (36) betätigbares zweites Betätigungselement (32) gebildet ist, wobei beide Betätigungselemente (31, 32) mit zusammenwirkenden Schrägen (33, 34) bzw. Rampen versehen sind.

9. Hydraulische Fahrzeugbremse nach einem der Ansprüche 2 bis 7 **dadurch gekennzeichnet, dass** eine weitere Feder (19) vorgesehen ist, die sich am Bremsgehäuse (1) abstützt und die die Spindel (16) in Richtung auf die zweite Reibfläche (18) vorspannt.

10. Hydraulische Fahrzeugbremse nach Anspruch 1, **dadurch gekennzeichnet, dass** mindestens ein Teil (42) der Verriegelungsvorrichtung im Arbeitsspeicher (10) angeordnet ist.

11. Hydraulische Fahrzeugbremse nach Anspruch 10, **dadurch gekennzeichnet, dass** der Arbeitsspeicher (10) durch einen mit dem Betriebsdruckraum (7) in Verbindung stehenden, absperrbaren Speicherdruckraum (40) sowie einen den Speicherdruckraum (40) begrenzenden Speicherkolben (41) gebildet ist, der mit einem begrenzt drehbar angeordneten Stellring (42) in kraftübertragender Verbindung steht, an dem sich das Federelement (12) abstützt und der mit einer Spindel (16) in Eingriff bringbar ist, die mittels eines nicht selbsthemmenden Gewindes mit dem Bremskolben (6) verbunden ist, wobei die Verriegelungsvorrichtung durch den Stellring (42) und die Spindel (16) gebildet ist.

12. Hydraulische Fahrzeugbremse nach Anspruch 11, **dadurch gekennzeichnet, dass** der Stellring (42) Führungsvorsprünge (47) aufweist, die in unterschiedlich langen Führungsnuten (48,49) geführt sind, die in der Wand eines den Arbeitsspeicher (10) aufnehmenden Gehäuse (52) in seiner Umfangsrichtung versetzt ausgebildet sind, wobei die Länge der kürzeren Führungsnut (48) die gelöste Position der Verriegelungsvorrichtung und die Länge der längeren Führungsnut (49) die verriegelte Position der Verriegelungsvorrichtung definiert.

13. Hydraulische Fahrzeugbremse nach Anspruch 1, **dadurch gekennzeichnet, dass** der Betriebsdruckraum (7) einerseits durch den Bremskolben (6) und andererseits durch einen Speicherkolben (54,64,94) begrenzt ist, an dem sich ein Federpaket (60,63,90) abstützt, wobei bei der Betätigung der Verriegelungsvorrichtung eine erste Kontakt- oder Reibfläche (57,71,97) sowie eine zweite Kontakt- oder Reibfläche (58,72,98) in Eingriff und beim Lösen außer Eingriff gebracht werden.

14. Hydraulische Fahrzeugbremse nach Anspruch 13, **dadurch gekennzeichnet, dass** die Verriegelungsvorrichtung durch eine Gewindemutter-Spindel-Anordnung gebildet ist, deren Spindel (56) mit dem Bremskolben (6) verbunden ist, während die Gewindemutter (55) mit einer ersten Reibfläche (57) versehen ist, die im verriegelten Zustand mit einer im Speicherkolben (54) ausgebildeten zweiten Reibfläche (58) zusammenwirkt, und wobei eine elektromagnetische Einrichtung (62) vorgesehen ist, die eine Zugkraft auf ein mit der Gewindemutter (55) fest verbundenes Zugkraftübertragungsteil (61) ausübt und somit eine starre Verriegelung zwischen dem Bremskolben (6) und dem Speicherkolben (54) bewirkt.

15. Hydraulische Fahrzeugbremse nach Anspruch 14, **dadurch gekennzeichnet, dass** zwischen der Gewindemutter (55) und der Spindel (56) ein nicht selbsthemmendes Gewinde vorgesehen ist.

16. Hydraulische Fahrzeugbremse nach Anspruch 1 **dadurch gekennzeichnet, dass** der Arbeitsspeicher (10) durch einen mit dem Betriebsdruckraum (7) in Verbindung stehenden, absperrbaren Speicherdruckraum (83) sowie einen den Speicherdruckraum (83) begrenzenden Speicherkolben (84) gebildet ist, wobei die Verbindung zwischen dem Betriebsdruckraum (7) und dem Speicherdruckraum (83) mittels eines mechanisch betätigbaren Trennventils (77) absperrbar ist.

17. Hydraulische Fahrzeugbremse nach Anspruch 13 oder 16, **dadurch gekennzeichnet, dass** die Verriegelungsvorrichtung durch eine Gewindemutter-Spindel-Anordnung gebildet ist, deren Spindel (66,76) durch einen Elektromotor (69,79) angetrieben wird, während die Gewindemutter (65,75) eine erste Kontaktfläche (71,81) aufweist, die im verriegelten Zustand mit einer im Bremskolben (6) ausgebildeten zweiten Kontaktfläche (72,82) zusammenwirkt.

18. Hydraulische Fahrzeugbremse nach Anspruch 16 und 17, **dadurch gekennzeichnet, dass** zwischen der Gewindemutter (65,75) und der Spindel (66,76) ein selbsthemmendes Gewinde vorgesehen ist.

19. Hydraulische Fahrzeugbremse nach, Anspruch 16 und 17, **dadurch gekennzeichnet, dass** das Trennventil (77) durch die Gewindemutter (75) betätigbar ist.

20. Hydraulische Fahrzeugbremse nach einem der Ansprüche 16 bis 19, **dadurch gekennzeichnet, dass** zwischen dem Betriebsdruckraum (7) und dem Speicherdruckraum (83) eine zweite Verbindung vorgesehen ist, in der ein zum Betriebsdruckraum (7) hin öffnendes Rückschlagventil (78) eingefügt ist.

21. Hydraulische Fahrzeugbremse nach Anspruch 2 oder 11, **dadurch gekennzeichnet, dass** der hydraulische Druckraum (22) bzw. Speicherdruckraum (40) mittels eines elektrisch schaltbaren Ventils (24,45) absperrbar ist.

22. Hydraulische Fahrzeugbremse nach Anspruch 1 oder 13, **dadurch gekennzeichnet, dass** eine Arretierungseinheit (91) vorgesehen ist, die den Arbeitsspeicher (10) während Betriebsbremsungen in seinem geladenen Zustand hält.

23. Hydraulische Fahrzeugbremse nach Anspruch 22, **dadurch gekennzeichnet, dass** die Arretierungseinheit (91) durch mindestens einen Elektromagneten (95) gebildet wird, dessen Spule (89) die Funktion eines Sensors zur Erfassung der Position eines vom Anker (92) des Elektromagneten (95) betätigten Schiebers (93) ausübt.

24. Hydraulische Fahrzeugbremse nach Anspruch 23, **dadurch gekennzeichnet, dass** die Spule (89) die Funktion eines Sensors zur Überwachung des im Betriebsdruckraum (7) eingesteuerten Druckes und/oder zur Erfassung des Zustands der Fahrzeugbremse oder der Feststellbremseinrichtung ausübt.

25. Hydraulische Fahrzeugbremse nach Anspruch 22, **dadurch gekennzeichnet, dass** die Arretierungseinheit (91) durch mindestens zwei Elektromagnete (95,105) gebildet wird, deren Anker (92,102) auf den Schieber (93) wirken, wobei die Spule (89) des ersten Elektromagneten (95) den Schieber (93) betätigt, während die Spule (109) des zweiten Elektromagneten (105) die Funktion eines Sensors zur Erfassung der Schieberposition ausübt.

26. Hydraulische Fahrzeugbremse nach Anspruch 25, **dadurch gekennzeichnet, dass** die Spulen (89, 109) die Funktion eines Sensors zur Erfassung der Schieberposition ausüben, wenn sie nicht die Funktion eines Aktuator zur Betätigung des Schiebers (93) ausüben.

27. Hydraulische Fahrzeugbremse nach Anspruch 22, **dadurch gekennzeichnet, dass** die Arretierungseinheit (91) durch mindestens einen piezo-elektrischen Aktuator (103) gebildet wird, der einen Schieber (93) betätigt und dessen Position erfasst.

28. Hydraulische Fahrzeugbremse nach Anspruch 27, **dadurch gekennzeichnet, dass** der piezo-elektrische Aktuator (103) die Funktion eines Sensors zur Überwachung des im Betriebsdruckraum (7) eingesteuerten Druckes und/oder zur Erfassung des Zustands der Fahrzeugbremse oder der Feststellbremseinrichtung ausübt.

29. Hydraulische Fahrzeugbremse nach einem der Ansprüche 2, 11 oder 22 **dadurch gekennzeichnet, dass** ein Mittel (30) zum Lösen der Feststellbremse im Notfall vorgesehen ist, das mit dem Schaltkolben (27) bzw. dem Speicherkolben (41, 94) zusammenwirkt.

30. Hydraulische Fahrzeugbremse nach einem der vorhergehenden Ansprüche, **dadurch gekennzeichnet, dass** der Druckaufbau sowohl im Betriebsdruckraum (7) als auch im hydraulischen Druckraum (22) bzw. Speicherdruckraum (40) mittels einer hydraulischen Pumpe erfolgt, die als Fremddruckquelle eines elektrohydraulischen Bremssystems dient.

31. Hydraulische Fahrzeugbremse nach einem der vorhergehenden Ansprüche 1 bis 29, **dadurch gekennzeichnet, dass** der Druckaufbau sowohl im Betriebsdruckraum (7) als auch im hydraulischen Druckraum (22) bzw. Speicherdruckraum (40) mittels eines durch den Fahrzeugführer betätigbaren Druckerzeugers erfolgt.

## Claims

1. A hydraulic vehicle brake equipped with a parking brake device, in particular for motor vehicles, including a brake housing in which a hydraulic service pressure chamber is delimited by a brake piston, with the parking brake device acting on the brake piston and, in the applied condition, being lockable by means of a locking device, and an energy accumulator cooperating with the brake piston being equipped with at least one integrated spring element,
**characterized in that** the parking brake device is operable by a pressure that is introduced into the service pressure chamber (7) and enables charging the energy accumulator (10).

2. Hydraulic vehicle brake as claimed in claim 1,
**characterized in that** the energy accumulator (10) is formed of a recess (11) in the brake piston (6) accommodating the spring element (12), and **in that** the spring element (12) is supported on a plate (13) that is in a force-transmitting connection with the brake piston (6) and cooperates with a first friction lining (3).

3. Hydraulic vehicle brake as claimed in claim 2,
**characterized in that** the locking device is a threaded-nut/spindle assembly (14), the threaded nut (15) thereof being supported on the brake piston (6) or being integrally designed with the brake piston (6), while the spindle (16) includes a first friction surface (17) interacting, in the locked condition, with a second friction surface (18) that is arranged in an unrotatable manner in the brake housing (1).

4. Hydraulic vehicle brake as claimed in claim 3,
**characterized in that** the spindle (16) is equipped with an axial central bearing (21), which cooperates with a hydraulic or electromechanical device (22, 27, or 35, respectively) for activating the locking device (14).

5. Hydraulic vehicle brake as claimed in claim 4,
**characterized in that** the hydraulic device (22, 27) is formed of a closable pressure chamber (22) being in connection with the service pressure chamber (7), and of an operating piston (27) delimiting the pressure chamber (22) and being preloaded by means of a spring assembly (28), said operating piston cooperating with the spindle (16) in such a fashion that, after decrease of the pressure prevailing in the pressure chamber (22), the force produced by the spring assembly (28) is transmitted to the spindle (16) in order to thereby cause disengagement of the friction surfaces (17, 18) of the locking device.

6. Hydraulic vehicle brake as claimed in claim 5,
**characterized in that** the operating piston (27) has a two-part design, consisting of a first operating piston part (27a) and a second operating piston part (27b), and a spring assembly (29) is interposed between the two operating piston parts (27a, 27b) so as to allow a movement of the first operating piston part (27a) relative to the second operating piston part (27b).

7. Hydraulic vehicle brake as claimed in claim 6,
**characterized in that** the force generated by the spring assembly (28) is transmitted to the spindle (16) by means of the first operating piston part (27a), while the second operating piston part (27b) has an annular design and radially encompasses the first operating piston part (27a).

8. Hydraulic vehicle brake as claimed in claim 4,
**characterized in that** the electromechanical device (35) is formed of an actuating element (31) that is in a force-transmitting connection with the spindle (16), and of a second actuating element (32) operable by means of an electromagnetic arrangement (36), with both actuating elements (31, 32) including interacting slopes (33, 34) or ramps, respectively.

9. Hydraulic vehicle brake as claimed in any one of claims 2 to 7,
**characterized in that** there is provision of another spring (19) that is supported on the brake housing (1) and biases the spindle (16) in the direction of the second friction surface (18).

10. Hydraulic vehicle brake as claimed in claim 1,
**characterized in that** at least one part (42) of the locking device is arranged in the energy accumulator (10).

11. Hydraulic vehicle brake as claimed in claim 10,
**characterized in that** the energy accumulator (10) is formed of a closable accumulator pressure chamber (40) being in connection with the service pressure chamber (7), and of an accumulator piston (41) delimiting the accumulator pressure chamber (40) and being in a force-transmitting connection with an adjusting ring (42) that is arranged so as to be rotatable within limits, the spring element (12) being supported on the adjusting ring, which is movable into engagement with a spindle (16) that is connected to the brake piston (6) by means of a non-self-locking thread, with the locking device being formed of the adjusting ring (42) and the spindle (16).

12. Hydraulic vehicle brake as claimed in claim 11,
**characterized in that** the adjusting ring (42) includes guiding projections (47) being guided in differently long guiding grooves (48, 49), that are provided in the wall of a housing (52) accommodating the energy accumulator (10) offset in its circumferential direction, and the length of the short guiding groove (48) defines the released position of the locking device, and the length of the longer guiding groove (49) defines the locked position of the locking device.

13. Hydraulic vehicle brake as claimed in claim 1,
**characterized in that** the service pressure chamber (7) is delimited by the brake piston (6) on one side and by an accumulator piston (54, 64, 94) on the other side, on which piston a spring assembly (60, 63, 90) is supported, and a first contact or friction surface (57, 71, 97) and a second contact or friction surface (58, 72, 98) are moved into engagement with each other upon actuation of the locking device, while they are disengaged during release.

14. Hydraulic vehicle brake as claimed in claim 13,
**characterized in that** the locking device is formed of a threaded-nut/spindle assembly whose spindle (56) is connected to the brake piston (6), while the threaded nut (55) is provided with a first friction surface (57) cooperating, in the locked condition, with a second friction surface (58) provided in the accumulator piston (54), and an electromagnetic device (62) is arranged exerting a tension force on a tension-force transmitting element (61) rigidly connected to the threaded nut (55) and, thus, causing a rigid locking engagement between the brake piston (6) and the accumulator piston (54).

15. Hydraulic vehicle brake as claimed in claim 14,
**characterized in that** a non-self-locking thread is interposed between the threaded nut (55) and the spindle (56).

16. Hydraulic vehicle brake as claimed in claim 1,
**characterized in that** the energy accumulator (10) is formed of a closable accumulator pressure chamber (83) connected to the service pressure chamber (7), and of an accumulator piston (84) delimiting the accumulator pressure chamber (83), with the connection between the service pressure chamber (7) and the accumulator pressure chamber (83) being closable by means of a mechanically operable separating valve (77).

17. Hydraulic vehicle brake as claimed in claim 13 or 16,
**characterized in that** the locking device is provided by a threaded-nut/spindle assembly, whose spindle (66, 76) is driven by an electric motor (69, 79), while the threaded nut (65, 75) has a first contact surface (71, 81) that cooperates, in the locked condition, with a second contact surface (72, 82) designed in the brake piston (6).

18. Hydraulic vehicle brake as claimed in claims 16 and 17,
**characterized in that** a self-locking thread is provided between the threaded nut (65, 75) and the spindle (66, 76).

19. Hydraulic vehicle brake as claimed in claims 16 and 17,
**characterized in that** the separating valve (77) is operable by the threaded nut (75).

20. Hydraulic vehicle brake as claimed in any one of claims 16 to 19,
**characterized in that** a second connection is provided between the service pressure chamber (7) and the accumulator pressure chamber (83), in which a non-return valve (78) opening towards the service pressure chamber (7) is inserted.

21. Hydraulic vehicle brake as claimed in claim 2 or 11,
**characterized in that** the hydraulic pressure chamber (22) and the accumulator pressure chamber (40), respectively, is closable by means of an electrically operable valve (24, 45).

22. Hydraulic vehicle brake as claimed in claim 1 or 13,
**characterized in that** an arresting unit (91) is provided which maintains the energy accumulator (10) in its charged condition during service brake operations.

23. Hydraulic vehicle brake as claimed in claim 22,
**characterized in that** the arresting unit (91) is formed of at least one electromagnet (95) whose coil (89) fulfils the function of a sensor for sensing the position of a slide (93) actuated by the armature (92) of the electromagnet (95).

24. Hydraulic vehicle brake as claimed in claim 23,
**characterized in that** the coil (89) fulfils the function of a sensor for monitoring the pressure introduced into the service pressure chamber (7) and/or for detecting the condition of the vehicle brake or the parking brake device.

25. Hydraulic vehicle brake as claimed in claim 22,
**characterized in that** the arresting unit (91) is formed of at least two electromagnets (95, 105), whose armatures (92, 102) act upon the slide (93), and the coil (89) of the first electromagnet (95) actuates the slide (93), while the coil (109) of the second electromagnet (105) fulfils the function of a sensor for detecting the slide position.

26. Hydraulic vehicle brake as claimed in claim 25,
**characterized in that** the coils (89, 109) fulfill the function of a sensor for detecting the slide position, unless they fulfill the function of an actuator for actuating the slide (93).

27. Hydraulic vehicle brake as claimed in claim 22,
**characterized in that** the arresting unit (91) is formed of at least one piezoelectric actuator (103) that actuates a slide (93) and detects its position.

28. Hydraulic vehicle brake as claimed in claim 27,
**characterized in that** the piezoelectric actuator (103) fulfils the function of a sensor for monitoring the pressure introduced into the service pressure chamber (7) and/or for detecting the condition of the vehicle brake or the parking brake device.

29. Hydraulic vehicle brake as claimed in any one of claims 2, 11 or 22,
**characterized in that** a means (30) is provided for releasing the parking brake in a case of emergency, said means cooperating with the operating piston (27) or the accumulator piston (41, 94), respectively.

30. Hydraulic vehicle brake as claimed in any one of the preceding claims,
**characterized in that** the pressure buildup both in the service pressure chamber (7) and in the hydraulic pressure chamber (22) or the accumulator pressure chamber (40), respectively, takes place by means of a hydraulic pump which is used as an independent pressure source of an electrohydraulic brake system.

31. Hydraulic vehicle brake as claimed in any one of the preceding claims 1 to 29,
**characterized in that** the pressure buildup both in the service pressure chamber (7) and in the hydraulic pressure chamber (22) or the accumulator pressure chamber (40), respectively, takes place by means of a pressure generator operable by the vehicle driver.

## Revendications

1. Frein hydraulique de véhicule avec dispositif de frein de stationnement, en particulier pour véhicules automobiles, avec un boîtier de frein dans lequel une chambre sous pression hydraulique de service est limitée par un piston de frein, le dispositif de frein de stationnement agissant sur le piston de frein et pouvant être verrouillé, à l'état serré, au moyen d'un dispositif de verrouillage, et un accumulateur de travail, coopérant avec le piston de frein, étant prévu avec au moins un élément de ressort intégré, **caractérisé en ce que** le dispositif de frein de stationnement peut être actionné par une pression introduite dans la chambre sous pression de service (7), et par laquelle l'accumulateur de travail (10) peut être chargé.

2. Frein hydraulique de véhicule selon la revendication 1, **caractérisé en ce que** l'accumulateur de travail (10) est formé par un évidement (11) pratiqué dans le piston de frein (6) et recevant l'élément de ressort (12), et **en ce que** l'élément de ressort (12) est soutenu sur une plaque (13) en liaison de transmission de la force avec le piston de frein (6), laquelle plaque coopère avec une première garniture de frottement (3).

3. Frein hydraulique de véhicule selon la revendication 2, **caractérisé en ce que** le dispositif de verrouillage est formé par un dispositif à broche et écrou taraudé (14), dont l'écrou taraudé (15) prend appui contre le piston de frein (6) ou est réalisé d'un seul tenant avec le piston de frein (6), tandis que la broche (16) est pourvue d'une première surface de frottement (17) qui, à l'état verrouillé, coopère avec une deuxième surface de frottement (18) disposée bloquée en rotation dans le boîtier de frein (1).

4. Frein hydraulique de véhicule selon la revendication 3, **caractérisé en ce que** la broche (16) est pourvue d'un palier central axial (21) qui coopère avec un dispositif hydraulique ou électromécanique (22, 27 ou 35) pour activer le dispositif de verrouillage (14).

5. Frein hydraulique de véhicule selon la revendication 4, **caractérisé en ce que** le dispositif hydraulique (22, 27) est formé par une chambre sous pression (22) pouvant être fermée et communiquant avec la chambre sous pression de service (7), ainsi que par un piston de commutation (27) précontraint au moyen d'un paquet de ressorts (28), et délimitant la chambre sous pression (22), lequel coopère avec la broche (16) de manière qu'après un abaissement de la pression régnant dans la chambre sous pression (22), il se produise une transmission à la broche (16) de la force appliquée par le paquet de ressorts (28), ce qui fait que les surfaces de frottement (17, 18) du dispositif de verrouillage sont désengagées l'une de l'autre.

6. Frein hydraulique de véhicule selon la revendication 5, **caractérisé en ce que** le piston de commutation (27) est réalisé en deux parties et est constitué d'une première partie de piston de commutation (27a) ainsi que d'une deuxième partie de piston de commutation (27b), un dispositif à ressort (29) étant disposé entre les deux parties de piston de commutation (27a, 27b), de manière qu'un mouvement relatif de la première partie de piston de commutation (27a) par rapport à la deuxième partie de piston de commutation (27b) soit possible.

7. Frein hydraulique de véhicule selon la revendication 6, **caractérisé en ce que** la transmission de la force appliquée par le paquet de ressorts (28) à la broche (16), s'effectue au moyen de la première partie de piston de commutation (27a), tandis que la deuxième partie de piston de commutation (27b) est réalisée en forme d'anneau et entoure radialement la première partie de piston de commutation (27a).

8. Frein hydraulique de véhicule selon la revendication 4, **caractérisé en ce que** le dispositif électromécanique (35) est formé par un élément d'actionnement (31), en liaison de transmission de la force avec la broche (16), ainsi que par un deuxième élément d'actionnement (32) pouvant être actionné au moyen d'un dispositif électromagnétique (36), les deux éléments d'actionnement (31, 32) étant pourvus de surfaces obliques (33, 34) ou rampes coopérantes.

9. Frein hydraulique de véhicule selon l'une des revendications 2 à 7, **caractérisé en ce qu'**il est prévu un autre ressort (19) qui prend appui contre le boîtier de frein (1) et qui précontraint la broche (16) en direction de la deuxième surface de frottement (18).

10. Frein hydraulique de véhicule selon la revendication 1, **caractérisé en ce qu'**au moins une partie (42) du dispositif de verrouillage est disposée dans l'accumulateur de travail (10).

11. Frein hydraulique de véhicule selon la revendication 10, **caractérisé en ce que** l'accumulateur de travail (10) est formé par une chambre sous pression d'accumulateur (40) pouvant être fermée et communiquant avec la chambre sous pression de service (7), ainsi que par un piston d'accumulateur (41), limitant la chambre sous pression d'accumulateur (40), lequel est en liaison de transmission de la force avec un anneau de réglage (42) disposé de manière à pouvoir tourner dans une mesure limitée, anneau contre lequel prend appui l'élément de ressort (12) et qui peut être amené en prise avec une broche (16) laquelle est reliée au piston de frein (6) au moyen d'un filetage non autobloquant, le dispositif de verrouillage étant formé par l'anneau de réglage (42) et la broche (16).

12. Frein hydraulique de véhicule selon la revendication 11, **caractérisé en ce que** l'anneau de réglage (42) présente des saillies de guidage (47) qui sont guidées dans des rainures de guidage (48, 49) de longueurs différentes et qui sont réalisées dans la paroi d'un boîtier (52) recevant l'accumulateur de travail (10), décalées dans la direction périphérique du boîtier, la longueur de la rainure de guidage la plus courte (48) définissant la position déverrouillée du dispositif de verrouillage, et la longueur de la rainure de guidage la plus longue (49) définissant la position verrouillée du dispositif de verrouillage.

13. Frein hydraulique de véhicule selon la revendication 1, **caractérisé en ce que** la chambre sous pression de service (7) est limitée d'une part par le piston de frein (6) et d'autre part par un piston d'accumulateur (54, 64, 94) contre lequel prend appui un paquet de ressorts (60, 63, 90), à l'actionnement du dispositif de verrouillage une première surface de contact ou de frottement (57, 71, 87) ainsi qu'une deuxième surface de contact ou de frottement (58, 72, 98) étant amenées en prise, et désengagées lors du déverrouillage.

14. Frein hydraulique de véhicule selon la revendication 13, **caractérisé en ce que** le dispositif de verrouillage est formé par un dispositif à broche et écrou taraudé dont la broche (56) est reliée au piston de frein (6), tandis que l'écrou taraudé (55) est pourvu d'une première surface de frottement (57) qui, à l'état verrouillé, coopère avec une deuxième surface de frottement (58) réalisée dans le piston d'accumulateur (54), et un dispositif électromagnétique (62) étant prévu qui exerce une force de traction sur un élément de transmission de la force de traction (61), solidaire de l'écrou taraudé (55), et provoque ainsi un verrouillage fixe entre le piston de frein (6) et le piston d'accumulateur (54).

15. Frein hydraulique de véhicule selon la revendication 14, **caractérisé en ce qu'**il est prévu un filetage non autobloquant entre l'écrou taraudé (55) et la broche (56).

16. Frein hydraulique de véhicule selon la revendication 1, **caractérisé en ce que** l'accumulateur de travail (10) est formé par une chambre sous pression d'accumulateur (83) pouvant être fermée et communiquant avec la chambre sous pression de service (7), ainsi que par un piston d'accumulateur (84) limitant la chambre sous pression d'accumulateur (83), la liaison entre la chambre sous pression de service (7) et la chambre sous pression d'accumulateur (83) pouvant être fermée au moyen d'une soupape de séparation (77) à actionnement mécanique.

17. Frein hydraulique de véhicule selon la revendication 13 ou 16, **caractérisé en ce que** le dispositif de verrouillage est formé par un dispositif à broche et écrou taraudé dont la broche (66, 76) est entraînée par un moteur électrique (69, 79), tandis que l'écrou taraudé (65, 75) présente une première surface de contact (71, 81) qui, à l'état verrouillé, coopère avec une deuxième surface de contact (72, 82) réalisée dans le piston de frein (6).

18. Frein hydraulique de véhicule selon les revendications 16 et 17, **caractérisé en ce qu'**il est prévu un filetage autobloquant entre l'écrou taraudé (65, 75) et la broche (66, 76).

19. Frein hydraulique de véhicule selon les revendications 16 et 17, **caractérisé en ce que** la soupape de séparation (77) peut être actionnée par l'écrou taraudé (75).

20. Frein hydraulique de véhicule selon l'une des revendications 16 à 19, **caractérisé en ce qu'**il est prévu, entre la chambre sous pression de service (7) et la chambre sous pression d'accumulateur (83), une deuxième liaison dans laquelle est inséré un clapet anti-retour (78) s'ouvrant vers la chambre sous pression de service (7).

21. Frein hydraulique de véhicule selon la revendication 2 ou 11, **caractérisé en ce que** la chambre sous pression hydraulique (22) ou la chambre sous pression d'accumulateur (40) peut être fermée au moyen d'une soupape (24, 45) à commande électrique.

22. Frein hydraulique de véhicule selon la revendication 1 ou 13, **caractérisé en ce qu'**il est prévu une unité d'arrêt (91) qui maintient l'accumulateur de travail (10) dans son état chargé pendant les freinages de service.

23. Frein hydraulique de véhicule selon la revendication 22, **caractérisé en ce que** l'unité d'arrêt (91) est formée par au moins un électro-aimant (95) dont la bobine (89) assure la fonction d'un capteur pour détecter la position d'un coulisseau (93) actionné par la palette (92) de l'électro-aimant (95).

24. Frein hydraulique de véhicule selon la revendication 23, **caractérisé en ce que** la bobine (89) assure la fonction d'un capteur pour surveiller la pression introduite dans la chambre sous pression de service (7) et/ou pour détecter l'état du frein de véhicule ou du dispositif de frein de stationnement.

25. Frein hydraulique de véhicule selon la revendication 22, **caractérisé en ce que** l'unité d'arrêt (91) est formée par au moins deux électro-aimants (95, 105) dont les palettes (92, 102) agissent sur le coulisseau (93), la bobine (89) du premier électro-aimant (95) actionnant le coulisseau (93), tandis que la bobine (109) du deuxième électro-aimant (105) assure la fonction d'un capteur pour détecter la position du coulisseau.

26. Frein hydraulique de véhicule selon la revendication 25, **caractérisé en ce que** les bobines (89, 109) assurent la fonction d'un capteur pour détecter la position du coulisseau, lorsqu'il n'assure pas la fonction d'un actionneur pour actionner le coulisseau (93).

27. Frein hydraulique de véhicule selon la revendication 22, **caractérisé en ce qu'**une unité d'arrêt (91) est formée par au moins un actionneur piézo-électrique (103) qui actionne un coulisseau (93) et détecte sa position.

28. Frein hydraulique de véhicule selon la revendication 27, **caractérisé en ce que** l'actionneur piézo-électrique (103) assure la fonction d'un capteur pour surveiller la pression introduite dans la chambre sous pression de service (7) et/ou pour détecter l'état du frein de véhicule ou du dispositif de frein de stationnement.

29. Frein hydraulique de véhicule selon l'une des revendications 2, 11 ou 22, **caractérisé en ce qu'**il est prévu un moyen (30), pour déverrouiller le frein de stationnement en cas d'urgence, lequel coopère avec le piston de commutation (27) ou le piston d'accumulateur (41, 94).

30. Frein hydraulique de véhicule selon l'une des revendications précédentes, **caractérisé en ce que** la montée en pression aussi bien dans la chambre sous pression de service (7) que dans la chambre sous pression hydraulique (22) ou chambre sous pression d'accumulateur (40), s'effectue au moyen d'une pompe hydraulique qui sert de source de pression externe d'un système de freinage électro-hydraulique.

31. Frein hydraulique de véhicule selon l'une des revendications 1 à 29 précédentes, **caractérisé en ce que** la montée en pression dans la chambre sous pression de service (7) comme dans la chambre sous pression hydraulique (22) ou chambre sous pression d'accumulateur (40) s'effectue au moyen d'un générateur de pression qui peut être actionné par le conducteur du véhicule.
